# EUROPEAN PATENT SPECIFICATION

(11) **EP 3 308 934 B1**
(45) Date of publication and mention of the grant of the patent: **04.03.2020**
(21) Application number: 16807421.9
(22) Date of filing: 06.06.2016
(51) Int. Cl.: B29C 45/34, B29C 33/18, B29C 45/14, B29L 31/00

(54) **IN-MOLD INJECTION MOLDING MOLD DEVICE**
IN-FORM-SPRITZGUSSFORMVORRICHTUNG
DISPOSITIF DE MOULE POUR MOULAGE PAR INJECTION AVEC INSERT

(30) Priority: 11.06.2015 JP 2015118344
(43) Date of publication of application: 18.04.2018
(73) Proprietor: Daikin Industries, Ltd., Osaka 530-8323 (JP)
(72) Inventor: SEDOU, Touta, Osaka 530-8323 (JP)
(74) Representative: Hoffmann Eitle
(86) International application number: PCT/JP2016/066747
(87) International publication number: WO 2016/199714

(56) References cited:
- JP-A- H1 170 543
- JP-A- H10 100 204
- JP-A- H10 156 870
- JP-A- H10 156 870
- JP-A- 2000 006 199
- JP-A- 2008 055 730

## Description

### TECHNICAL FIELD

The present invention relates to an in-mold injection molding mold device in which a decorative film is arranged in a cavity to mold a resin molded product.

In-mold injection molding is widely used for exterior components of relatively small dimensions such as mobile phones, cosmetics containers, and sundries (refer to, for example, JP 2013 166257 A and JP 2001 239525 A). There has recently been a demand for in-mold injection molding that allows for the decoration of large resin molded products such as front panels of room air conditioners.

An in-mold injection molding mold device used for an in-mold injection molding method such as that disclosed in JP 2013 166257 A and patent JP 2001 239525 A includes a male mold provided with a core, a female mold provided with a cavity, and a clamper that clamps a decorative film outside the cavity.

In-mold injection molding using such an in-mold injection molding mold device is performed in the following manner. First, in a state in which the male mold and the female mold are open, the decorative film is arranged in the molds and clamped around the cavity. Then, the decorative film is suctioned and applied to the inner surface of the cavity. Subsequently, the male mold and the female mold are closed to form a molding cavity between the two molds. Resin is injected into the molding cavity and then cooled so that the pattern of the decorative film will be transcribed onto the resin molded product.

JP H10 156870 A discloses an annular groove which is formed to encircle a cavity at an area remote by a specified distance from an edge part which serves as a border between the parting face of a female die and the rising face of the cavity. At the same time, vacuum-suction holes are opened at an arbitrarily selected pitch in the annular groove, and recessed parts which are not large enough to reach the vacuum suction holes and the annular groove are formed at an arbitrarily selected pitch on the edge part.

JP H10 100204 A discloses a movable mold which has a cavity recessed part injecting molten resin, a parting face against which a clamp component clamping an in-mold decoration film arranged thereon abuts, and a suction hole for sucking the in-mold decoration film. The suction hole is positioned inside from a position against which the clamp component of the parting face abuts, and the parting face from the suction hole to the cavity recessed part is formed in a finely irregular face. Since a state wherein a fine clearance is formed between the in-mold decoration film and the finely irregular is obtained thereby when the film is sucked, partial inferiority in adhesion of the in-mold decoration film onto an inner face of the cavity recessed part is removed.

### SUMMARY OF THE INVENTION

### PROBLEMS THAT ARE TO BE SOLVED BY THE INVENTION

A resin molded product such as a front panel of a room air conditioner may include a planar portion and a bend portion that rises from the planar portion. In a mold that forms such a resin molded product, the bottom surface of a cavity and a clamp surface each include a suction hole. When suctioning the decorative film to mold the resin molded product, air may remain in a region between the suction hole in the bottom surface of the cavity and the suction hole in the clamp surface. When air remains in such a manner, the decorative film may be scratched, torn, or creased. Further, the residual air may locally stretch the decorative film and reduce the thickness of a colored layer.

The present invention has been made in view of such problems, and it is an object of the present invention to provide an in-mold injection molding mold device that resolves problems that occur in a decorative film such as scratching, tearing, creasing, and color fading resulting from local thinning.

### MEANS FOR SOLVING THE PROBLEMS

In order to solve the problems and in accordance with one aspect of the present invention, there is provided an in-mold injection molding mold device that forms a resin molded product including a bent portion. An in-mold injection device according to the present invention is defined by claim 1. The in-mold injection molding mold device is provided with a female mold, a male mold, and a clamper. The female mold includes a cavity that defines a decorative surface side of the resin molded product. The male mold includes a core that defines a non-decorative surface side of the resin molded product. The clamper holds a decorative film and is arranged outside the cavity of the female mold. The female mold includes a first suction hole, a second suction hole, and a recessed suction groove that function as a discharge passage when air is discharged from a void between a cavity surface that defines the cavity and the decorative film. The first suction hole opens in a bottom surface of the cavity. The second suction hole opens in a clamp surface of the female mold, against which the male mold is abutted with the decorative film located in between, at a position located inward from the clamper (40). The suction groove is formed in a surface of the female mold so as to connect the cavity and the second suction hole.

With this structure, the suction groove discharges air from a region in the cavity between the first suction hole and the second suction hole and reduces the air that remains in this portion. This resolves problems that occur in the decorative film caused by air that remains between the decorative film and the cavity surface, such as scratching, tearing, creasing, and color fading resulting from local thinning.

The core includes a contact portion that contacts a side surface of the cavity by means of the decorative film. The suction groove connects an inner surface portion, which is a portion in the side surface of the cavity where an edge of the bent portion of the resin molded product would be located, with the second suction hole. With this structure, air is efficiently discharged. This shortens the time required for the decorative film to adhere to the female mold.

Dependent claims relate to preferred embodiments. Preferably, an arcuate surface forms a corner between the clamp surface and a portion in the side surface of the cavity located upward from the inner surface portion. With this structure, the decorative film easily adheres to a portion extending from the side surface of the cavity to the clamp surface.

The core may include a recess shaped in correspondence with an end of the bent portion of the resin molded product. In this case, preferably, the suction groove is formed in the clamp surface so as to extend to a side surface that rises from a bent surface of the cavity. This structure facilitates the formation of the suction groove.

Preferably, the suction groove is formed to have a cross-sectional shape that does not allow the decorative film to adhere entirely to an inner surface of the suction groove when air is discharged from the void between the cavity surface and the decorative film. With this structure, the suction groove is not closed by the adhesion of the decorative film when the decorative film is suctioned. Thus, the air existing between the cavity surface and the decorative film can be continuously discharged during the suctioning period.

Preferably, the suction groove has a width and a depth set so that a corner at each of two sides of a bottom of the suction groove in a cross section of the suction groove form a space without adhering to the decorative film. With this structure, when the decorative film is suctioned, the corner at each of the two sides of the bottom of the suction groove in a cross section does not adhere to the decorative film and forms a space. This limits decreases in the force that suctions the decorative film.

A resin molded product is produced by the in-mold injection molding mold device.

The in-mold injection molding mold device resolves problems that occur in a decorative film such as scratching, tearing, creasing, and color fading resulting from local thinning. This reduces ornamental defects caused by scratches, tearing, creases, and color fading resulting from local thinning in the decorative film at the bent portion of the resin molded product produced by the in-mold injection molding mold device. Thus, the resin molded product is superior in terms of ornamentality.

### EFFECT OF THE INVENTION

The in-mold injection molding mold device succeeds in resolving problems that occur in a decorative film such as scratching, tearing, creasing, and color fading resulting from local thinning.

### BRIEF DESCRIPTION OF THE DRAWINGS

Fig. 1 is a cross-sectional view of an in-mold injection molding mold device according to one embodiment of the present invention.
Fig. 2 is an enlarged view of portion A in Fig. 1.
Fig. 3 is a perspective view of a corner of the in-mold injection molding mold device shown in Fig. 1.
Fig. 4(a) is a cross-sectional view taken along line B-B in Fig. 3 when suctioning is started, and Fig. 4(b) is a cross-sectional view taken along line B-B in Fig. 3 when suctioning is ended.
Fig. 5(a) is a cross-sectional view of a prior art in-mold injection molding mold device, and Fig. 5(b) is a perspective view of a resin molded product formed by the prior art in-mold injection molding mold device.
Fig. 6(a) is a diagram illustrating the suctioning of a decorative film by suction grooves of the in-mold injection molding mold device according to the embodiment, and Fig. 6(b) is a perspective view of a resin molded product formed by the in-mold injection molding mold device according to the embodiment.
Fig. 7 is a perspective view of a modified example of a cavity.
Fig. 8(a) is a cross-sectional view of an in-mold injection molding mold device according to a further embodiment of the present invention, Fig. 8(b) is a diagram illustrating the suctioning of a decorative film by suction grooves of the in-mold injection molding mold device shown in Fig. 8(a), and Fig. 8(c) is a perspective view of a resin molded product formed by the in-mold injection molding mold device shown in Fig. 8(a).
Fig. 9 is a cross-sectional view of a modified example of the suction groove.
Fig. 10 is a perspective view of a modified example of the suction groove.

### MODES FOR CARRYING OUT THE INVENTION

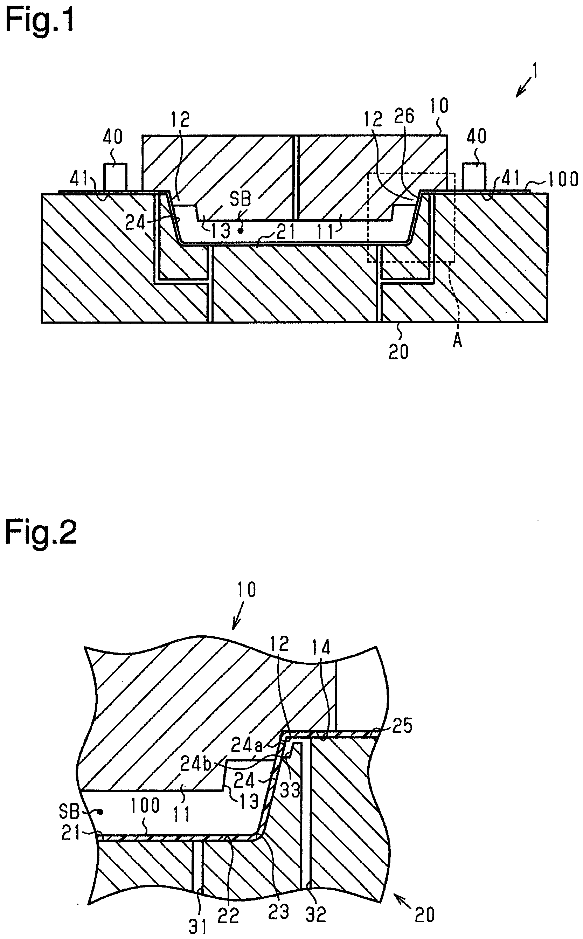

An in-mold injection molding mold device will now be described with reference to Figs. 1 to 7.

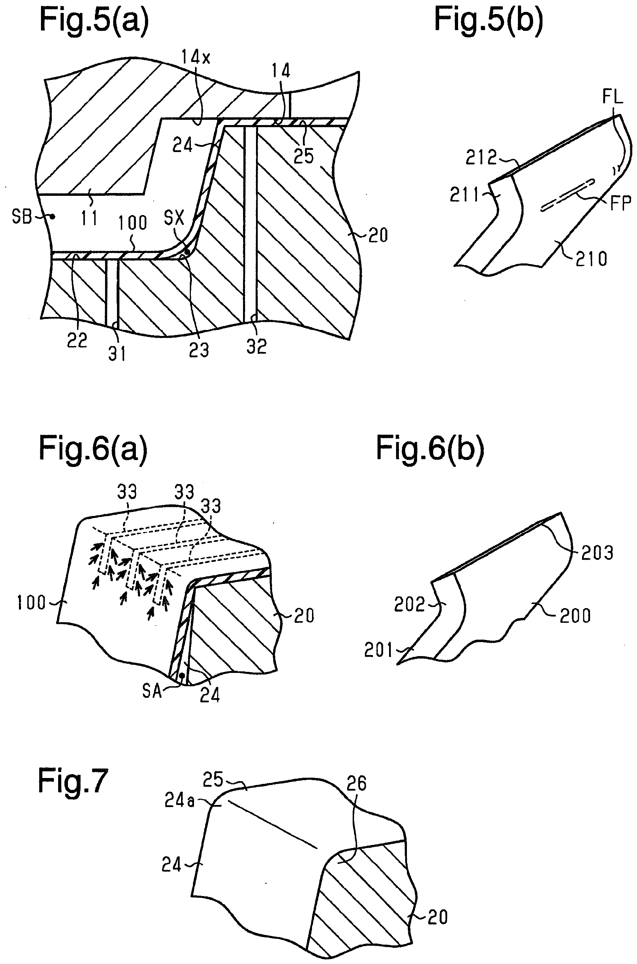

Fig. 1 is a cross-sectional view of an in-mold injection molding mold device 1 according to one embodiment of the present invention. The in-mold injection molding mold device 1 forms a resin molded product 200 including a decorative surface that is decorated with the decorative film 100. In the present embodiment, the resin molded product 200 includes a flat planar portion 201 and a bent portion 202 that rises from the planar portion 201 (refer to Fig. 6(b)). The decorative surface is formed by, for example, decorating one of the two surfaces of the planar portion 201 of the resin molded product 200 and the surface of the bent portion 202 that is continuous with that surface of the planar portion 201. The surface of the resin molded product 200 located at the opposite side of the decorative surface is a non-decorative surface. The resin molded product 200 includes an inner surface and an outer surface because of the presence of the bent portion 202. In the resin molded product 200 formed by the in-mold injection molding mold device 1 of Fig. 1, the outer surface of the resin molded product 200 is the decorative surface, and the inner surface of the resin molded product 200 is the non-decorative surface.

The in-mold injection molding mold device 1 includes a male mold 10 provided with a core 11, a female mold 20 provided with a cavity 21, and a clamper 40 arranged outside the cavity 21 of the female mold 20 to hold the decorative film 100. The male mold 10 defines a non-decorative surface side of the resin molded product 200. The female mold 20 defines a decorative surface side of the resin molded product 200. The cavity 21 is defined by a cavity surface including a bottom surface 22 and a side surface 24. The core 11 includes a contact portion 12, which contacts the side surface 24 of the cavity 21 by means of the decorative film 100, and a non-contact portion 13, which is shaped in correspondence with the non-decorative surface side of the resin molded product 200.

The female mold 20 will now be described with reference to Fig. 2.

The female mold 20 includes a clamp surface 25. The male mold 10 is abutted against the clamp surface 25 with the decorative film 100 located in between. The cavity 21 of the female mold 20 is shaped in correspondence with the decorative surface side of the resin molded product 200. A bent surface 23 is provided between the bottom surface 22 and the side surface 24 of the cavity 21. More specifically, the cavity surface of the cavity 21 includes the bottom surface 22, the bent surface 23 that is continuous with the bottom surface 22, and the side surface 24 that rises from the bent surface 23. The side surface 24 of the cavity 21 extends diagonally (i.e., diagonally to the movement direction of male mold 10). This facilitates removal of the resin molded product 200 from the cavity 21.

The female mold 20 includes a first suction hole 31 and a second suction hole 32 that are used when the decorative film 100 is suctioned. The first suction hole 31 opens in the bottom surface 22 of the cavity 21. The first suction hole 31 is located, for example, proximate to the bent surface 23. The second suction hole 32 opens in a portion of the clamp surface 25 located inward from the clamper 40.

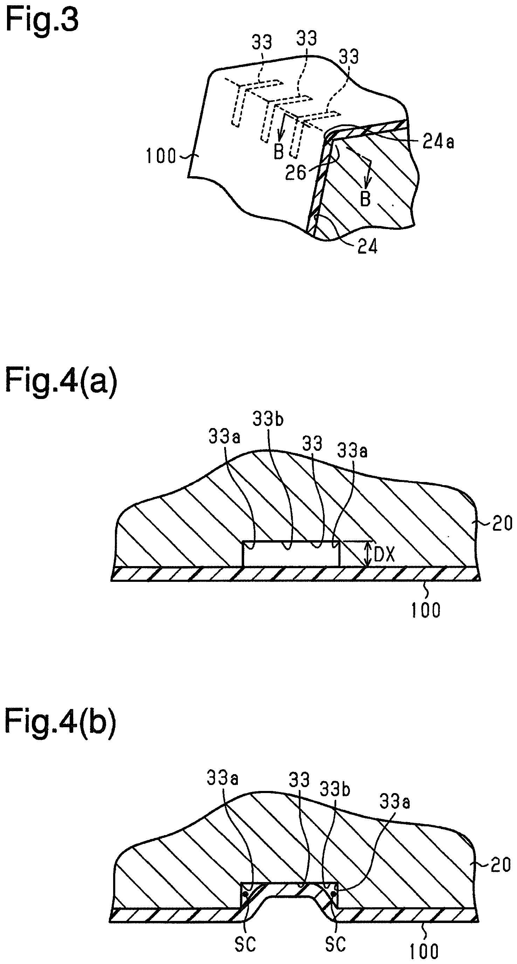

As shown in Figs. 2 and 3, the female mold 20 includes suction grooves 33. The suction grooves 33 are formed in the surface of the female mold 20 and connect the cavity 21 with the second suction hole 32. For example, as shown in Fig. 2, the suction grooves 33 are formed in the surface of the female mold 20 so that an inner surface portion 24b, which is a portion in the side surface 24 of the cavity 21 where an edge 203 of the bent portion 202 of the resin molded product 200 would be located, is in communication with the second suction hole 32, more precisely, so that the portion of the cavity 21 where the edge 203 of the resin molded product 200 would be located is in communication with the second suction hole 32. That is, the suction grooves 33 extend in the clamp surface 25 from the second suction hole 32 toward the cavity 21 and further extend in the side surface 24 of the cavity 21 toward the portion where the edge 203 of the resin molded product 200 would be located. Among the ends of each suction groove 33, the position (level) of the end of each suction groove 33 located in the side surface 24 of the cavity 21 is located a few millimeters toward the clamp surface 25 (i.e., upward as viewed in Fig. 2) from the position (level) of the edge 203 of the resin molded product 200 to be formed in the cavity 21.

The suction grooves 33 are configured as recessed grooves.

The first suction hole 31, the second suction hole 32, and the suction grooves 33 function as a discharge passage that discharges air from between the female mold 20 and the decorative film 100, that is, from a void SA between the cavity surface and the decorative film 100 (refer to Fig. 6(a)).

Preferably, each suction groove 33 is formed to have a cross-sectional shape that does not allow the decorative film 100 to adhere entirely to the inner surface of the suction groove 33 when the suction grooves 33 discharge air from the void SA between the cavity surface and the decorative film 100.

Each suction groove 33 has a width and a depth DX set so that the suction groove 33 has an interior region (region closed by the decorative film 100, refer to Fig. 4(a)) in which a corner 33a at each of the two sides of the bottom portion of the suction groove 33 in a cross section of the suction groove 33 does not adhere to the decorative film 100 and forms a space SC (refer to Fig. 4(b)). Further, the depth DX of the suction groove 33 is set to be relatively small so that deep creases are not formed in the decorative film 100 when the decorative film 100 is pressed by the male mold 10 and the female mold 20.

For example, as shown in Fig. 4(a), each suction groove 33 is formed so that its interior region has a rectangular cross section. That is, the suction groove 33 may have a rectangular cross section. Further, as shown in Fig. 4(b), the width of each suction groove 33 is set so that the decorative film 100 adheres to part of a bottom surface 33b of the suction groove 33 but does not entirely adhere to the bottom surface 33b when suctioned. Preferably, the width of each suction groove 33 is small so that the decorative film 100 contacts none of the bottom surface 33b of the suction groove 33 when suctioned.

The operation of the in-mold injection molding mold device 1 will now be described with reference to Figs. 5(a) to 6(b).

Fig. 5(a) is a cross-sectional view showing a prior art in-mold injection molding mold device 1. In the prior art in-mold injection molding mold device 1, the core 11 does not include the contact portion 12 that contacts the side surface 24 of the cavity 21 by means of the decorative film 100. In the in-mold injection molding mold device 1, an extended surface 14x extending from a clamp surface 14 of the core 11 defined the shape of an end surface 212 of a bent portion 211 in a resin molded product 210. The female mold 20 does not include the suction grooves 33.

In the mold device 1, when the air existing between the decorative film 100 and the cavity surface is discharged through the first suction hole 31 and the second suction hole 32 to adhere the decorative film 100 to the cavity surface, residual air will form an air void SX in the region between the bottom surface 22 and the clamp surface 25, more specifically, in the region between the first suction hole 31 and the second suction hole 32. In this state, as a molding cavity SB between the male mold 10 and the female mold 20 becomes filled with resin, the decorative film 100 will squeeze the air void SX. In this case, local thinning of the decorative film 100 will cause color fading, creasing, scratching, tearing, or the like. With reference to Fig. 5(b), consequently, a color-faded portion FP, a crease FL, a scratch, a tear, or the like will be formed in the decorative surface of the resin molded product 210.

Fig. 6(a) illustrates a state in which the suction grooves 33 of the in-mold injection molding mold device 1 according to the embodiment of Fig. 1 are suctioning the decorative film 100. Fig. 6(b) is a perspective view of the resin molded product 200 formed by the in-mold injection molding mold device 1 according to the embodiment.

In the in-mold injection molding mold device 1 according to the embodiment, the core 11 includes the contact portion 12 that contacts the side surface 24 of the cavity 21 by means of the decorative film 100. The female mold 20 includes the suction grooves 33 that are in communication with the second suction hole 32. As described above, the suction grooves 33 extend in the clamp surface 25 from the second suction hole 32 toward the cavity 21. The suction grooves 33 further extend where the edge 203 of the bent portion 202 of the resin molded product 200 would be located, that is, along the side surface 24 of the cavity 21 toward the inner surface portion 24b.

In such a structure, when the air existing between the decorative film 100 and the cavity surface is discharged through the first suction hole 31 and the second suction hole 32 to adhere the decorative film 100 to the cavity surface, air is continuously discharged from the region between the bottom surface 22 and the clamp surface 25, more specifically, the region between the first suction hole 31 and the second suction hole 32, and further specifically, the void SA adjacent to the side surface 24. This is because the suction grooves 33 extend along the side surface 24 of the cavity 21, the perimeter of each suction groove 33 is relatively large, and the suction grooves 33 cannot be easily sealed. In particular, when there are two or more suction grooves 33, air is continuously discharged as long as the suction grooves 33 are not completely closed. This reduces the residual air between the decorative film 100 and the cavity surface.

When discharging air from between the decorative film 100 and the cavity surface, the decorative film 100 adheres to the cavity surface. Depending on the case, the decorative film 100 may also adhere to the bottom surface 33b of a suction groove 33 (refer to Fig. 4(b)). If the decorative film 100 adheres entirely to the inner surface of the suction groove 33, the flow passage for air would be eliminated such that air cannot be discharged. However, as described above, each suction groove 33 has a cross-sectional shape that does not allow the decorative film 100 to adhere to the entire inner surface of the suction groove 33. This ensures that the space SC is obtained at each corner 33a of the suction groove 33 (refer to Fig. 4(b)), and air can be continuously discharged through the space SC from between the decorative film 100 and the cavity surface. This limits the formation of an air void SX and resolves the problems that occur in the prior art in-mold injection molding mold device 1. More specifically, this limits color fading, creasing, scratching, tearing, and the like caused by local thinning of the decorative film 100.

If the decorative film 100 adheres to the bottom surface 33b of the suction groove 33, a crease will be formed in the decorative film 100 along the suction groove 33. However, the suction groove 33 extends in the side surface 24 of the cavity 21 only to a position located before the edge 203 of the bent portion 202 of the resin molded product 200 and does not extend beyond this position. In other words, the suction groove 33 is located at a position separated from the decorative surface of the resin molded product 200. This limits the formation of a crease FL in the decorative surface.

A method for manufacturing the resin molded product 200 will now be described.

In a state in which the male mold 10 and the female mold 20 of the in-mold injection molding mold device 1 shown in Fig. 1 are open, the decorative film 100 is arranged in the cavity 21 of the female mold 20. The decorative film 100 is supported by the clamper 40. The clamper 40 clamps the decorative film 100 in a manner allowing the decorative film 100 to slide relative to a film clamp surface 41 (refer to Fig. 1) of the clamper 40.

Then, air is discharged from the void SA between the cavity surface of the cavity 21 and the decorative film 100. Consequently, the decorative film 100 adheres to the bottom surface 22 and the side surface 24 of the cavity 21, while forming a gap between the decorative film 100 and the bent surface 23. Air is discharged from the gap through the suction grooves 33 in the side surface 24 and out of the second suction hole 32. Consequently, the decorative film 100 adheres to the entire cavity surface.

Each suction groove 33 has a cross-sectional shape that does not allow the decorative film 100 to entirely adhere to the inner surface of the suction groove 33. This forms the space SC between the decorative film 100 and the bottom surface 33b of each suction groove 33 to where the decorative film 100 does not adhere. Even when the decorative film 100 adheres entirely to the cavity surface, the space SC remains between the decorative film 100 and each suction groove 33. This allows air to be discharged through the space SC. Thus, the decorative film 100 is adhered thoroughly to the cavity surface.

After the decorative film 100 is suctioned, the male mold 10 and the female mold 20 of the in-mold injection molding mold device 1 are closed and the space between the cavity 21 and the core 11 is filled with resin. After a predetermined time elapses, the male mold 10 and the female mold 20 are opened, the resin molded product 200 is removed, and the decorative film 100 is delaminated from the resin molded product 200. As a result, the transcription layer of the decorative film 100 remains on the resin molded product 200. This obtains the decorated resin molded product 200.

The advantages of the in-mold injection molding mold device 1 according to the present embodiment will now be described.
(1) In the present embodiment, the female mold 20 includes the first suction hole 31, the second suction hole 32, and the recessed suction grooves 33 that function as a discharge passage when air is discharged from the void SA between the cavity surface, which defines the cavity 21, and the decorative film 100. The first suction hole 31 opens in the bottom surface 22 of the cavity 21. The second suction hole 32 opens in a portion of the clamp surface 25 located inward from the clamper 40. The suction grooves 33 are formed in the surface of the female mold 20 connecting the cavity 21 and the second suction hole 32.
   In this structure, the suction grooves 33 discharge air from the void SA (void between the decorative film 100 and the cavity surface) in the region between the first suction hole 31 and the second suction hole 32 in the cavity 21. Thus, the air that remains in this portion is limited. This resolves problems that occur in the decorative film 100 caused by air that remains between the decorative film 100 and the cavity surface, such as scratching, tearing, creasing, and color fading resulting from local thinning.
(2) In the present embodiment, the core 11 includes the contact portion 12 that contacts the side surface 24 of the cavity 21 by means of the decorative film 100. The suction grooves 33 connect the second suction hole 32 to the inner surface portion 24b in the side surface 24 of the cavity 21 where the edge 203 of the bent portion 202 of the resin molded product 200 would be located. In this structure, air is efficiently discharged. This shortens the time required to adhere the decorative film to the cavity surface.
(3) As shown in Fig. 7, an arcuate surface 24a forms a corner 26 between the clamp surface 25 and a portion of the side surface 24 of the cavity 21 located upward from the inner surface portion 24b (toward the male mold 10). That is, the corner 26 between the side surface 24 of the cavity 21 and the clamp surface 25 is rounded. This structure facilitates adhesion of the decorative film 100 over a portion extending from the side surface 24 of the cavity 21 to the clamp surface 25.
(4) In the present embodiment, each suction groove 33 has a cross-sectional shape that does not allow the decorative film 100 to adhere entirely to the inner surface of the suction groove 33. Thus, when the decorative film 100 is suctioned, the adhesion of the decorative film 100 does not close the suction groove 33. This allows air to be continuously discharged from between the cavity surface and the decorative film 100 during the suctioning period.
(5) In the present embodiment, the width and the depth DX of the suction groove 33 is set so that when the decorative film 100 is suctioned, the decorative film 100 does not adhere to the corners 33a at the two sides of the bottom of the suction groove 33 in a cross section and forms the space SC at each corner 33a. Since the decorative film 100 does not adhere to the corner 33a at each of the two sides of the bottom of the suction groove 33 in a cross section of the suction groove 33 and forms the space SC, the suctioning force of the decorative film 100 does not decrease.
(6) The resin molded product 200 is produced by the in-mold injection molding mold device 1. The in-mold injection molding mold device 1 resolves problems that occur in the decorative film 100 such as scratching, tearing, creasing, and color fading resulting from local thinning. This reduces ornamental defects caused by scratches, tearing, creasing, and color fading resulting from local thinning in the decorative film 100 at the bent portion 202 of the resin molded product 200 produced by the in-mold injection molding mold device 1. Thus, the resin molded product 200 is superior in terms of ornamentality.

### Other Embodiments

The embodiment is not limited to the foregoing description and may be modified as described below.

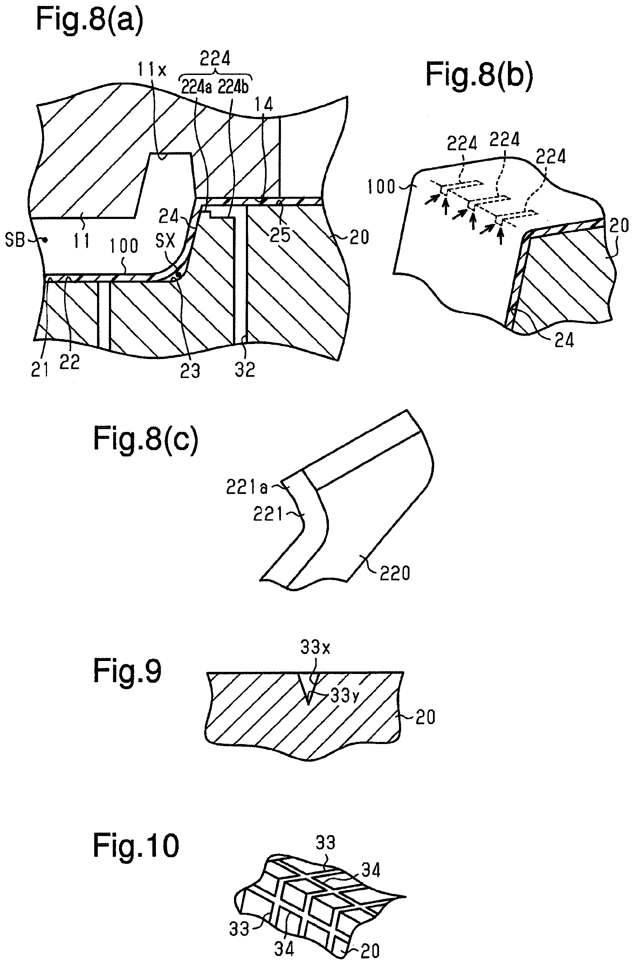

Fig. 8(a) is a cross-sectional view of the in-mold injection molding mold device 1 according to a further embodiment of the present invention. Fig. 8(b) is a diagram illustrating the suctioning of the decorative film 100 by suction grooves 224 of the in-mold injection molding mold device 1 shown in Fig. 8(a). Fig. 8(c) shows a resin molded product 220 formed by the in-mold injection molding mold device 1 shown in Fig. 8(a). In the in-mold injection molding mold device 1, the core 11 includes a recess 11x. The recess 11x is shaped in correspondence with an end 221a of a bent portion 221 of the resin molded product 220. The female mold 20 includes the suction grooves 224 that are in communication with the second suction hole 32. The suction grooves 224 extend in the clamp surface 25 from the second suction hole 32 toward the cavity 21 but differs from the above embodiment (in-mold injection molding mold device 1 of Fig. 1) in that they do not extend along the side surface 24 of the cavity 21. More specifically, the suction grooves 224 are formed in the clamp surface 25 to extend from the second suction hole 32 to the side surface 24, which rises from the bent surface 23 of the cavity 21. This structure obtains the same operation and advantage (advantage (1) mentioned above) of the above embodiment. Further, this structure facilitates the formation of the suction grooves 224.

For example, as shown in Fig. 8(a), each suction groove 224 connects a distal portion 224a, which is located close to the cavity 21, to a base 224b, which is located close to the second suction hole 32. The distal portion 224a of the suction groove 224 may have the same structure as the suction groove 33 of the above embodiment. The base 224b of the suction groove 224 has a larger cross-sectional area than the distal portion 224a of the suction groove 224. That is, the suction groove 224 narrows toward the cavity 21. This allows the decorative film to be suctioned with a larger force than a case in which the suction groove 224 is replaced by a suction groove entirely having the same cross-sectional area as the distal portion 224a of the suction groove 224.

On the other hand, since the core 11 includes the recess 11x that is shaped in correspondence with the end of the bent portion 221, the distal portion 224a of each suction groove 224 can be located proximate to the bent surface 23 of the cavity 21.
- The cross section of the interior region of each of the suction grooves 33 and 224 does not have to be rectangular. For example, the corners 33a between the side surfaces and the bottom surface 33b of each suction groove 33 do not have to be edged as shown in Fig. 4(a) and may be rounded. Alternatively, the corners between the side surfaces of the suction groove 33 and the clamp surface 25 or the side surface 24 of the cavity 21 may have a chamfered shape. As another option, the suction groove 33 may be replaced by a suction groove 33x that has a triangular cross section as shown in Fig. 9. In this case, the suctioning of the decorative film 100 leaves a corner 33y as a space where the decorative film 100 is not adhered. This limits decreases in the force for suctioning the decorative film 100.
- The suction grooves 33 do not necessarily have to be independent from one another and may be connected to one another by communication grooves 34 as shown in Fig. 10. With this structure, if any one of the suction grooves 33 becomes clogged with resin or the like, a bypass flow path can be formed to connect the cavity 21 and the second suction hole 32. This limits decreases in the force for suctioning the decorative film that would result from clogging caused by resin or the like.

### DESCRIPTION OF REFERENCE CHARACTERS

1) in-mold injection molding mold device, 10) male mold, 11) core, 11x) recess, 12) contact portion, 13) non-contact portion, 14) clamp surface, 14x) extended surface, 20) female mold, 21) cavity, 22) bottom surface, 23) bent surface, 24) side surface, 24a) surface forming corner, 24b) inner surface portion, 25) clamp surface, 26) corner, 31) first suction hole, 32) second suction hole, 33) suction groove, 33a) corner, 33b) bottom surface, 33x) suction groove, 33y) corner, 34) communication groove, 40) clamper, 41) film clamp surface, 100) decorative film, 200) resin molded product, 201) planar portion, 202) bent portion, 203) edge, 210) resin molded product, 211) bent portion, 212) end surface, 220) resin molded product, 221) bent portion, 221a) end, 224) suction groove, 224a) distal portion of suction groove, 224b) base of suction groove, DX) depth, FL) crease, FP) color-faded portion, SA) void, SB) molding cavity, SC) space, SX) air void.

## Claims

1. An in-mold injection molding mold device (1) that forms a resin molded product (200) including a bent portion (202), the in-mold injection molding mold device comprising:
a female mold (20) including a cavity (21) that defines a decorative surface side of the resin molded product (200);
a male mold (10) including a core (11) that defines a non-decorative surface side of the resin molded product (200); and
a clamper (40) that holds a decorative film (100) and is arranged outside the cavity (21) of the female mold (20), wherein
the female mold (20) includes a first suction hole (31), a second suction hole (32), and a recessed suction groove (33) that function as a discharge passage when air is discharged from a void (SA) between a cavity surface (22, 23, 24) that defines the cavity (21) and the decorative film (100),
the first suction hole (31) opens in a bottom surface (22) of the cavity (21),
the second suction hole (32) opens in a clamp surface (25) of the female mold (20), against which the male mold (10) is abutted with the decorative film (100) located in between, at a position located inward from the clamper (40), and
the suction groove (33) is formed in a surface of the female mold (20) so as to connect the cavity (21) and the second suction hole (32),
**characterized in that**:
the core (11) includes a contact portion (12) that contacts a side surface (24) of the cavity (21) by means of the decorative film (100), and
the suction groove (33) connects an inner surface portion (24b), which is a portion in the side surface (24) of the cavity (21) where an edge (203) of the bent portion (202) of the resin molded product (200) would be located, with the second suction hole (32).

2. The in-mold injection molding mold device according to claim 1, wherein an arcuate surface (24a) forms a corner (26) between the clamp surface (25) and a portion in the side surface (24) of the cavity (21) located upward from the inner surface portion (24b).

3. The in-mold injection molding mold device according to claim 1, wherein
the core (11) includes a recess (11x) shaped in correspondence with an end (221a) of the bent portion (221) of the resin molded product (220), and
the suction groove (224) is formed in the clamp surface (25) so as to extend to a side surface (24) that rises from a bent surface (23) of the cavity (21).

4. The in-mold injection molding mold device according to any one of claims 1 to 3, wherein the suction groove (33) is formed to have a cross-sectional shape that does not allow the decorative film (100) to adhere entirely to an inner surface of the suction groove (33) when air is discharged from the void (SA) between the cavity surface (22, 23, 24) and the decorative film (100).

5. The in-mold injection molding mold device according to any one of claims 1 to 3, wherein the suction groove (33) has a width and a depth set so that a corner (33a) at each of two sides of a bottom of the suction groove (33) in a cross section of the suction groove (33) form a space without adhering to the decorative film (100).

## Patentansprüche

1. In-Form-Spritzgussformvorrichtung (1), die ein Harzformprodukt (200) formt, einschließlich einem gebogenen Abschnitt (202), wobei die In-Form-Spritzgussformvorrichtung Folgendes umfasst:
eine Negativgussform (20), einschließlich einer Kavität (21), die eine dekorative Flächenseite des Harzformprodukts (200) definiert;
eine Positivgussform (10), einschließlich eines Kerns (11), der eine nicht-dekorative Flächenseite des Harzformprodukts (200) definiert; und
eine Klemme (40), die einen dekorativen Film (100) hält und außerhalb der Kavität (21) der Negativgussform (20) angeordnet ist, wobei
die Negativgussform (20) eine erste Ansaugöffnung (31), eine zweite Ansaugöffnung (32) und eine vertiefte Ansaugnut (33) einschließt, die als ein Ablassdurchgang fungieren, wenn Luft von einem Hohlraum (SA) zwischen einer Kavitätsfläche (22, 23, 24), welche die Kavität (21) definiert, und dem dekorativen Film (100) abgelassen wird,
wobei sich die erste Ansaugöffnung (31) in einer unteren Fläche (22) der Kavität (21) öffnet,
wobei sich die zweite Ansaugöffnung (32) in einer Klemmfläche (25) der Negativgussform (20), gegen welche die Positivgussform (10) mit dem dazwischen befindlichen dekorativen Film (100) anliegt, an einer Position öffnet, die sich von der Klemme (40) einwärts befindet, und
wobei die Ansaugnut (33) so in einer Fläche der Negativgussform (20) geformt ist, um die Kavität (21) und die zweite Ansaugöffnung (32) zu verbinden,
**dadurch gekennzeichnet, dass**:
der Kern (11) einen Kontaktabschnitt (12) einschließt, der eine Seitenfläche (24) der Kavität (21) mittels des dekorativen Films (100) kontaktiert, und
die Ansaugnut (33) einen Innenflächenabschnitt (24b), der ein Abschnitt in der Seitenfläche (24) der Kavität (21) ist, an der sich eine Kante (203) des gebogenen Abschnitts (202) des Harzformprodukts (200) befinden würde, mit der zweiten Ansaugöffnung (32) verbindet.

2. In-Form-Spritzgussformvorrichtung nach Anspruch 1, wobei eine bogenförmige Fläche (24a) eine Ecke (26) zwischen der Klemmfläche (25) und einem Abschnitt in der Seitenfläche (24) der Kavität (21), die sich aufwärts von dem Innenflächenabschnitt (24b) befindet, formt.

3. In-Form-Spritzgussformvorrichtung nach Anspruch 1, wobei
der Kern (11) eine Vertiefung (11x) einschließt, die entsprechend einem Ende (221a) des gebogenen Abschnitts (221) des Harzformprodukts (220) gebildet ist, und
die Ansaugnut (224) in der Klemmfläche (25) geformt ist, um sich zu einer Seitenfläche (24) hin zu erstrecken, die sich von einer gebogenen Fläche (23) der Kavität (21) erhebt.

4. In-Form-Spritzgussformvorrichtung nach einem der Ansprüche 1 bis 3, wobei die Ansaugnut (33) geformt ist, um eine Querschnittsgestalt aufzuweisen, die es dem dekorativen Film (100) nicht erlaubt, vollständig an einer Innenfläche der Ansaugnut (33) anzuhaften, wenn Luft von dem Hohlraum (SA) zwischen der Kavitätsfläche (22, 23, 24) und dem dekorativen Film (100) abgelassen wird.

5. In-Form-Spritzgussformvorrichtung nach einem der Ansprüche 1 bis 3, wobei die Ansaugnut (33) eine Breite und eine Tiefe aufweist, die derart eingestellt sind, dass eine Ecke (33a) an jeder von zwei Seiten einer Unterseite der Ansaugnut (33) in einem Querschnitt der Ansaugnut (33) einen Raum formen, ohne an dem dekorativen Film (100) anzuhaften.

## Revendications

1. Dispositif de moule de moulage par injection dans le moule (1) qui forme un produit moulé en résine (200) incluant une portion courbée (202), le dispositif de moule de moulage par injection dans le moule comprenant :
un moule femelle (20) incluant une cavité (21) qui définit un côté de surface décorative du produit moulé en résine (200) ;
un moule mâle (10) incluant un cœur (11) qui définit un côté de surface non décorative du produit moulé en résine (200) ; et
un dispositif de serrage (40) qui maintient un film décoratif (100) et est agencé à l'extérieur de la cavité (21) du moule femelle (20), dans lequel
le moule femelle (20) inclut un premier trou d'aspiration (31), un second trou d'aspiration (32), et une rainure d'aspiration évidée (33) qui fonctionnent comme un passage d'évacuation lorsque de l'air est évacué d'un vide (SA) entre une surface de cavité (22, 23, 24) qui définit la cavité (21) et le film décoratif (100),
le premier trou d'aspiration (31) donne dans une surface inférieure (22) de la cavité (21),
le second trou d'aspiration (32) donne dans une surface de serrage (25) du moule femelle (20), contre laquelle le moule mâle (10) vient en butée avec le film décoratif (100) situé entre eux, à une position située vers l'intérieur à partir du dispositif de serrage (40), et
la rainure d'aspiration (33) est formée dans une surface du moule femelle (20) de façon à raccorder la cavité (21) et le second trou d'aspiration (32),
**caractérisé en ce que** :
le cœur (11) inclut une portion de contact (12) qui vient au contact d'une surface latérale (24) de la cavité (21) au moyen du film décoratif (100), et
la rainure d'aspiration (33) raccorde une portion de surface interne (24b), qui est une portion dans la surface latérale (24) de la cavité (21) où un bord (203) de la portion coudée (202) du produit moulé en résine (200) serait situé, avec le second trou d'aspiration (32).

2. Dispositif de moule de moulage par injection dans le moule selon la revendication 1, dans lequel une surface arquée (24a) forme un coin (26) entre la surface de serrage (25) et une portion dans la surface latérale (24) de la cavité (21) située vers le haut à partir de la portion de surface interne (24b).

3. Dispositif de moule de moulage par injection dans le moule selon la revendication 1, dans lequel
le cœur (11) inclut un évidement (11x) mis en forme en correspondance avec une extrémité (221a) de la portion coudée (221) du produit moulé en résine (220), et
la rainure d'aspiration (224) est formée dans la surface de serrage (25) de façon à s'étendre jusqu'à une surface latérale (24) qui s'élève à partir d'une surface coudée (23) de la cavité (21).

4. Dispositif de moule de moulage par injection dans le moule selon l'une quelconque des revendications 1 à 3, dans lequel la rainure d'aspiration (33) est formée pour avoir une forme en section transversale qui ne permet pas au film décoratif (100) d'adhérer totalement à une surface interne de la rainure d'aspiration (33) lorsque de l'air est évacué du vide (SA) entre la surface de cavité (22, 23, 24) et le film décoratif (100).

5. Dispositif de moule de moulage par injection dans le moule selon l'une quelconque des revendications 1 à 3, dans lequel la rainure d'aspiration (33) a une largeur et une profondeur définies de sorte qu'un coin (33a) au niveau de chacun de deux côtés d'un fond de la rainure d'aspiration (33) dans une section transversale de la rainure d'aspiration (33) forme un espace sans adhérer au film décoratif (100).
